# EUROPÄISCHE PATENTSCHRIFT

(11) **EP 1 528 305 B1**
(45) Veröffentlichungstag und Bekanntmachung des Hinweises auf die Patenterteilung: **12.03.2008**
(21) Anmeldenummer: 04012255.8
(22) Anmeldetag: 24.05.2004
(51) Int. Cl.: F16K 31/06

(54) **Elektromagnetventil**
Electromagnetic valve
Soupape électromagnétique

(30) Priorität: 03.11.2003 DE 10351106
(43) Veröffentlichungstag der Anmeldung: 04.05.2005
(73) Patentinhaber: nass magnet GmbH, 30179 Hannover (DE)
(72) Erfinder: Groetzinger, Thomas, 30989 Gehrden (DE)
(74) Vertreter: Tetzner, Michael

(56) Entgegenhaltungen:
- EP-A- 0 416 788
- DE-A1- 3 823 569
- US-A- 5 143 345

## Beschreibung

Die Erfindung betrifft ein Magnetventil mit einem Ventilgehäuse mit Ventilsitz und einem Ventilstück, wobei das Ventilstück zwischen einer Öffnungs- und einer Schließstellung mit dem Ventilsitz zusammen wirkt sowie einem Elektromagnet mit einem Anker der zusammen mit wenigstens einer Feder auf das Ventilstück derart einwirkt, dass das Ventilstück im bestromten Zustand des Elektromagneten in die eine Stellung und im stromlosen Zustand in die andere Stellung gebracht wird. Die Erfindung bezieht sich ferner auf einen Bausatz für ein stromlos offenes oder ein stromlos geschlossenes Magnetventil.

Je nach Einbausituation wird ein normal geschlossenes (stromlos geschlossenes) oder ein normal geöffnetes (stromlos offenes) Ventil bevorzugt. Zur Herstellung derartiger NC bzw. NO-Ventile sind üblicherweise verschiedene Bauteile und Baugruppen erforderlich.

Die DE-A1-38 23 569 offenbart ein Elektromagnetventil mit einem aus zwei Gehäuseteilen bestehenden Ventilgehäuse. Im Ventilgehäuse ist ein Ventilsitzteil und ein Ventilteller angeordnet. Durch ein einfaches Umdrehen des Ventilsitzteils und die Anordnung des Ventiltellers oberhalb des Ventilsitzes kann in einfacher Weise ein stromlos offenes Ventil in ein stromlos geschlossenes Ventil umgestaltet werden. Bei beiden Anordnungen kann das gleiche Gehäuse verwendet werden.

Der Erfindung liegt die Aufgabe zugrunde, die Herstellung derartige Ventile zu vereinfachen und die Kosten zu senken.

Erfindungsgemäß wird diese Aufgabe durch die Merkmale des Anspruchs 1 gelöst.

Das erfindungsgemäße Magnetventil besteht im Wesentlichen aus einem Ventilgehäuse mit Ventilsitz und einem Ventilstück, wobei das Ventilstück zwischen einer Öffnungs- und einer Schließstellung mit dem Ventilsitz zusammenwirkt sowie einem Elektromagneten mit einem Anker der zusammen mit wenigstens einer Feder auf das Ventilstück derart einwirkt, dass das Ventilstück im bestromten Zustand des Elektromagneten in die eine Stellung und im stromlosen Zustand in die andere Stellung gebracht wird. Das Ventilgehäuse weist zwei gegenüberliegende Anschlussseiten auf, mit denen das Ventilgehäuse wahlweise am Elektromagnet angekoppelt werden kann, um entweder ein stromlos offenes oder stromlos geschlossenes Ventil zu schaffen.

Die beiden Ventilarten können somit mit den gleichen Bauteilen und Baugruppen realisiert werden. Dadurch ergeben sich wesentliche Vorteile bei der Werkzeugherstellung, der Lagerhaltung und den Teilekosten.

Weitere Ausgestaltungen der Erfindung sind Gegenstand der Unteransprüche.

Gemäß einem bevorzugten Ausführungsbeispiel ist zwischen Ventilgehäuse und Ventilstück ein Dichtungsring vorgesehen, wobei der Hub des Ventilstück von der einen in die andere Stellung so bemessen ist, dass es lediglich zu einem Walken des Dichtungsringes kommt. Bei bekannten Konstruktionen mit einem Druckausgleich ist zwischen dem Ventilstück und dem Dichtungsring eine translatorische Bewegung notwendig, die eine nicht unerhebliche Gleitreibung bewirkt.

Außerdem kann eine weitere Feder vorgesehen werden, wobei die beiden Federn an gegenüberliegenden Seiten mit dem Ventilstück in Kontakt kommen. Haben darüber hinaus beide Federn gleiche Federkräfte, wirken in beiden Einbausituationen des Ventilgehäuses gleiche Federkräfte auf das Ventilstück.

Gemäß einer besonderen Ausgestaltung ist das Magnetventil als druckausgeglichenes Ventil ausgebildet und das Ventil weist wenigstens zwei Öffnungen als Einlass bzw.
Auslass auf, die miteinander vertauscht werden können, da das Ventil in beiden Richtungen funktioniert.

Weitere Vorteile und Ausgestaltungen der Erfindung werden anhand der Beschreibung und der Zeichnung näher erläutert.

In der Zeichnung zeigen
- Fig. 1: eine Querschnittsdarstellung eines stromlos offenen Magnetventils,
- Fig. 2: eine Querschnittsdarstellung eines stromlos geschlossene Magnetventils.

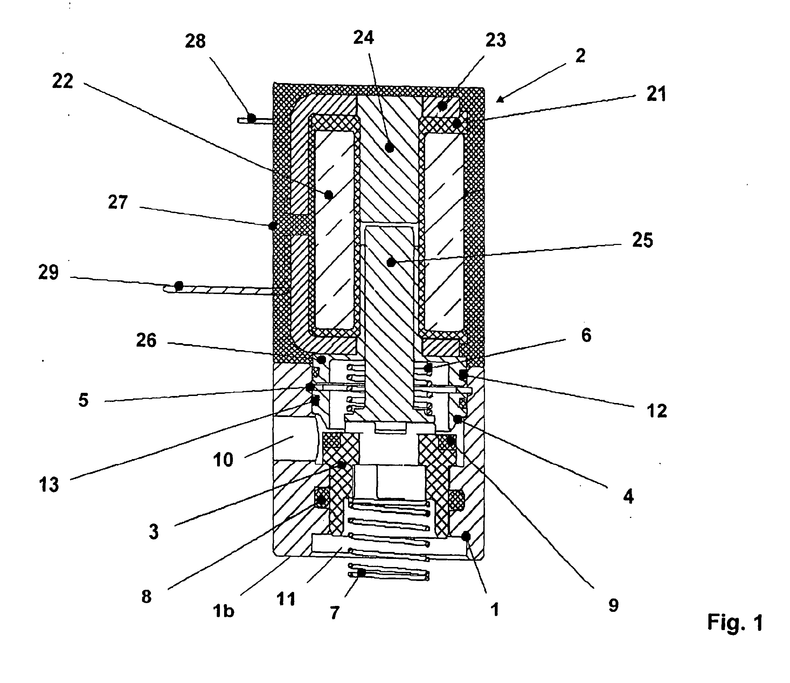

Das Magnetventil gemäß Fig. 1 besteht im Wesentlichen aus einem Ventilgehäuse 1 sowie einem Elektromagneten 2.

Der Elektromagnet 2 ist in an sich bekannter Art und Weise aufgebaut. So sind ein Spulenkörper 21 mit einer Wicklung 22 sowie ein Joch 23 vorgesehen. Im Spulenkörper 21 ist ferner ein Magnetkern 24 sowie ein über ein Polrohr 26 geführter Anker 25 angeordnet.

Der gesamte Elektromagnet ist von einer Ummantelung 27 umgeben, wobei Kontaktstifte 28 und eine Massezunge 29 herausgeführt sind.

Im Ventilgehäuse ist ein Ventilstück 3 angeordnet, welches zwischen einer Öffnungs- und einer Schließstellung mit einem Ventilsitz 4 zusammenwirkt. Der Ventilsitz 4 ist beispielsweise durch einen Sicherungsring 5 am Ventilgehäuse 1 festgelegt.

Der Anker 25 wirkt ferner mit einer Feder 6 derart zusammen, dass das Ventilstück im stromlosen Zustand in seine in Fig. 1 gezeigte Öffnungsstellung gebracht wird. Im bestromten Zustand des Elektromagneten wird der Anker 25 vom Magnetkern 24 angezogen, so dass das Ventilstück, unterstützt durch eine am anderen Ende des Ventilstücks angreifende Feder 7, in die Schließstellung gelangt.

Das Ventilstück 3 ist somit im Ventilgehäuse 1 verschiebbar angeordnet, wobei zwischen Ventilgehäuse und Ventilstück ein wahlweise innen oder außendichtender Dichtungsring 8 vorgesehen ist. Der Hub des Ventilstücks von der einen in die andere Stellung ist dabei vorzugsweise so bemessen, dass es lediglich zu einem Walken des Dichtungsringes kommt. Auf diese Weise kann eine ansonsten nicht unerhebliche Gleitreibung vermieden werden.

Das Ventilstück 3 ist ferner in seinem mit dem Ventilsitz in Kontakt kommenden Bereich mit einem Ventilgummi 9 versehen.

Das dargestellte Magnetventil weist zwei Öffnungen 10, 11 auf, die wahlweise als Einlass bzw. Auslass dienen.

Weiterhin sind zwischen Polrohr 26 und Ventilgehäuse 1 eine Dichtung 12 und zwischen Ventilsitz 4 und Ventilgehäuse eine Dichtung 13 vorgesehen.

Die Feder 6 stützt sich mit einem Ende am Polrohr 26 des Elektromagneten und mit seinem anderen Ende an einer flanschartigen Erweiterung des Ankers 25 ab. Die weitere Feder 7 greift mit einem Ende an einem inneren Ansatz des Ventilstücks 3 an und stützt sich mit seinem anderen Ende beispielsweise an einem nicht dargestellten Flansch ab, auf dem das Magnetventil befestigt wird. Zur Realisierung eines druckausgeglichenen Ventils wird der dichtende Durchmesser des Dichtungsringes 8 zwischen Ventilgehäuse 1 und Ventilstück 3 so bemessen, dass er dem dichtenden Durchmesser des Ventilsitzes 4 entspricht.

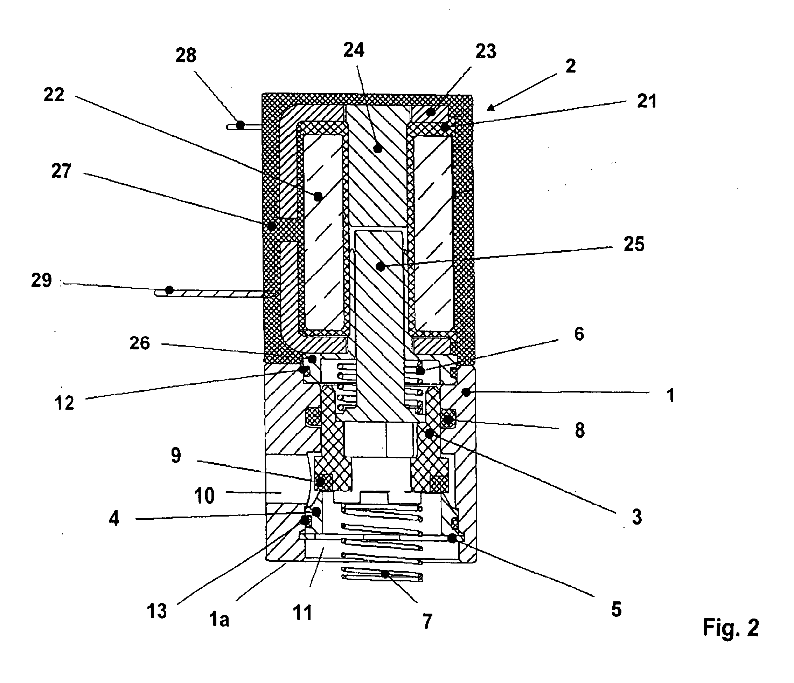

Die Besonderheit des dargestellten Magnetventils wird im Folgenden mit dem weiteren Bezug auf Fig. 2 näher erläutert. Da beide Magnetventile die gleichen Bauteile aufweisen, wurden die selben Bezugzeichen verwendet.

Die Besonderheit besteht darin, dass das Ventilgehäuse 1 zwei gegenüberliegende Anschlussseiten 1a und 1b aufweist, mit denen das Ventilgehäuse wahlweise am Elektromagnet angekoppelt werden kann, um entweder ein stromlos offenes oder ein stromlos geschlossenes Ventil zu schaffen. In Fig. 1 ist das Ventilgehäuse 1 mit seiner Anschlussseite 1a am Elektromagnet angekoppelt und bildet ein stromlos offenes Ventil. In Fig. 2 ist das Ventilgehäuse um 180° gedreht, d.h. mit seiner Anschlussseite 1b am Ventilgehäuse angekoppelt und bildet ein stromlos geschlossenes Ventil.

Beim Magnetventil gemäß Fig. 2 wird das Ventilstück 3 im stromlosen Zustand des Elektromagneten über den Anker 25 und die Feder 6 gegen den Ventilsitz 4 gedrückt, so dass der Kanal zwischen den beiden Öffnungen 10 und 11 geschlossen ist. Im bestromten Zustand wird der Anker 25 gegen die Kraft der Feder 6 vom Magnetkern 24 angezogen, so dass das Ventilstück 3 durch die Kraft der weiteren Feder 7 vom Ventilsitz 4 abgehoben und die Verbindung zwischen den beiden Öffnungen 10 und 11 freigegeben wird.

Die beiden Ventilarten gemäß den Fig. 1 und 2 können somit mit den gleichen Bauteilen und Baugruppen realisiert werden. Dadurch ergeben sich im Wesentlichen Vorteile bei der Werkzeugherstellung, der Lagerhalterung und den Teilekosten.

Ist das Magnetventil als druckausgeglichenes Ventil konzipiert, lassen sich zudem die Öffnungen 10 und 11 als Einlass bzw. Auslass vertauschen. Damit man im montierten Zustand des Magnetventils von außen erkennen kann, ob es sich um ein stromlos offenes oder ein stromlos geschlossenes Magnetventil handelt, wäre es denkbar, die seitliche Öffnung 10 nicht mittig zwischen den beiden Anschlussseiten 1a und 1b anzuordnen (siehe Fig. 1 und 2). Auf diese Weise unterscheiden sich die beiden Magnetventile dann äußerlich und können in ihrer Funktion bestimmt werden.

Es können somit ein und dieselben Bauteile für die Schaffung eines stromlos offenen oder eines stromlos geschlossenen Ventils verwendet werden.

## Patentansprüche

1. Magnetventil mit
a. einem Ventilgehäuse (1) mit Ventilsitz (4) und einem Ventilstück (3), wobei das Ventilstück zwischen einer Öffnungs- und einer Schließstellung mit dem Ventilsitz zusammenwirkt
b. sowie einem Elektromagnet (2) mit einem Anker (25) der zusammen mit wenigstens einer Feder (6) auf das Ventilstück (3) derart einwirkt, dass das Ventilstück im bestromten Zustand des Elektromagneten in die eine Stellung und im stromlosen Zustand in die andere Stellung gebracht wird,
**dadurch gekennzeichnet, dass** das Ventilgehäuse (1) zwei gegenüberliegende Anschlussseiten (1a, 1b) aufweist, mit denen das Ventilgehäuse wahlweise am Elektromagnet (2) angekoppelt werden kann, um entweder ein stromlos offenes oder ein stromlos geschlossenes Ventil zu schaffen.

2. Magnetventil nach Anspruch 1, **dadurch gekennzeichnet, dass** zwischen Ventilgehäuse (1) und Ventilstück (3) ein Dichtungsring (8) vorgesehen ist, wobei der Hub des Ventilstücks von der einen in die andere Stellung so bemessen ist, dass es lediglich zu einem Walken des Dichtungsringes kommt.

3. Magnetventil nach Anspruch 1, **dadurch gekennzeichnet, dass** das Ventil wenigstens zwei Öffnungen (10, 11) aufweist, die als Einlass bzw. Auslass dienen und wobei eine der beiden Öffnungen in der dem Elektromagnet (2) gegenüberliegenden Anschlussseite (1a; 1b) vorgesehen ist.

4. Magnetventil nach Anspruch 1, **dadurch gekennzeichnet, dass** das Ventil wenigstens zwei Öffnungen (10, 11) aufweist, wobei eine der beiden Öffnungen in der dem Elektromagnet gegenüberliegenden Anschlussseite (1a; 1b) vorgesehen ist und die andere Öffnung quer zu dieser in einer Seitenwand des Ventils angeordnet ist.

5. Magnetventil nach Anspruch 1, **dadurch gekennzeichnet, dass** eine weitere Feder (7) vorgesehen ist, wobei die beiden Federn (6, 7) an gegenüberliegenden Seiten mit dem Ventilstück (3) in Kontakt kommen.

6. Magnetventil nach Anspruch 1, **dadurch gekennzeichnet, dass** das Magnetventil als druckausgeglichenes Ventil ausgebildet ist und dass das Ventil wenigstens zwei Öffnungen (10, 11) als Einlass bzw. Auslass aufweist, die miteinander vertauscht werden können.

7. Magnetventil nach Anspruch 1, **dadurch gekennzeichnet, dass** das Magnetventil als druckausgeglichenes Ventil ausgebildet ist.

8. Magnetventil nach Anspruch 1, **dadurch gekennzeichnet, dass** zwischen Ventilgehäuse (1) und Ventilstück (3) ein Dichtungsring (8) vorgesehen ist, wobei der dichtende Durchmesser des Dichtungsrings (8) dem dichtenden Durchmesser des Ventilsitzes (4) entspricht.

## Claims

1. Solenoid valve having
a. a valve housing (1) having a valve seat (4) and a valve member (3), the valve member cooperating with the valve seat between an open position and a closed position,
b. and an electromagnet (2) having an armature (25) which, together with at least one spring (6), acts on the valve member (3) in such a manner that the valve member is brought into one position when the electromagnet is in the energised state and into the other position when the electromagnet is in the non-energised state,
**characterised in that** the valve housing (1) has two opposing connection sides (la, 1b) with which the valve housing can be coupled to the electromagnet (2) in order to produce either a valve that is open when non-energised or a valve that is closed when non-energised.

2. Solenoid valve according to claim 1, **characterised in that** an o-ring (8) is provided between the valve housing (1) and the valve member (3), the stroke of the valve member from one position to the other being such that the o-ring is simply squeezed.

3. Solenoid valve according to claim 1, **characterised in that** the valve has at least two openings (10, 11) which serve as inlet and outlet, one of the two openings being provided in the connection side (la; 1b) opposite the electromagnet (2).

4. Solenoid valve according to claim 1, **characterised in that** the valve has at least two openings (10, 11), one of the two openings being provided in the connection side (la; 1b) opposite the electromagnet and the other opening being arranged transversely thereto in a side wall of the valve.

5. Solenoid valve according to claim 1, **characterised in that** a further spring (7) is provided, the two springs (6, 7) coming into contact with the valve member (3) on opposite sides.

6. Solenoid valve according to claim 1, **characterised in that** the solenoid valve is in the form of a pressure-compensated valve and **in that** the valve has at least two openings (10, 11) as inlet and outlet, which openings are mutually interchangeable.

7. Solenoid valve according to claim 1, **characterised in that** the solenoid valve is in the form of a pressure-compensated valve.

8. Solenoid valve according to claim 1, **characterised in that** an o-ring (8) is provided between the valve housing (1) and the valve member (3), the sealing diameter of the o-ring (8) corresponding to the sealing diameter of the valve seat (4).

## Revendications

1. Soupape électro-magnétique avec:
a. un boîtier de soupape (1) avec un siège de soupape (4) et une pièce de soupape (3), où la pièce de soupape coopère entre une position d'ouverture et une position de fermeture avec le siège de soupape;
b. avec un électro-aimant (2) avec un induit (25) qui agit conjointement avec au moins un ressort (6) sur la pièce de soupape (3) de façon que la pièce de soupape, à l'état alimenté de l'électro-aimant, est amenée dans une position et, à l'état sans courant, dans l'autre position,
**caractérisée en ce que** le boîtier de soupape (1) présente deux côtés de raccordement opposés (la, 1b) par lesquels le boîtier de soupape peut être couplé sélectivement à l'électro-aimant (2) pour créer soit une soupape ouverte sans courant soit une soupape fermée sans courant.

2. Soupape électro-magnétique selon la revendication 1, **caractérisée en ce qu'**il est prévu entre le boîtier de soupape (1) et la pièce de soupape (3) une bague d'étanchéité (8), où la course de la pièce de soupape d'une position à l'autre est dimensionnée de façon à produire seulement un foulage de la bague d'étanchéité.

3. Soupape électro-magnétique selon la revendication 1, **caractérisée en ce que** la soupape présente au moins deux ouvertures (10, 11) qui servent d'entrée respectivement de sortie, et où une des deux ouvertures est prévue dans le côté de raccordement (la; 1b) opposé à l'électro-aimant (2).

4. Soupape électro-magnétique selon la revendication 1, **caractérisée en ce que** la soupape présente au moins deux ouvertures (10, 11), où l'une des deux ouvertures est prévue dans le côté de raccordement (1a; 1b) opposé à l'électro-aimant et l'autre ouverture est disposée transversalement à celle-ci dans une paroi latérale de la soupape.

5. Soupape électro-magnétique selon la revendication 1, **caractérisée en ce qu'**un autre ressort (7) est prévu, les deux ressorts (6, 7) venant en contact à des côtés opposés avec la pièce de soupape (3).

6. Soupape électro-magnétique selon la revendication 1, **caractérisée en ce que** la soupape électro-magnétique est réalisée comme soupape égalisée en pression, et **en ce que** la soupape présente au moins deux ouvertures (10, 11) comme entrée respectivement sortie qui peuvent être échangées entre elles.

7. Soupape électro-magnétique selon la revendication 1, **caractérisée en ce que** la soupape électro-magnétique est réalisée comme soupape égalisée en pression.

8. Soupape électro-magnétique selon la revendication 1, **caractérisée en ce qu'**il est prévue entre le boîtier de soupape (1) et la pièce de soupape (3) une bague d'étanchéité (8), le diamètre d'étanchéité de la bague d'étanchéité (8) correspondant au diamètre d'étanchéité du siège de soupape (4).
